# EUROPÄISCHE PATENTSCHRIFT

(11) **EP 2 112 054 B1**
(45) Veröffentlichungstag und Bekanntmachung des Hinweises auf die Patenterteilung: **10.11.2010**
(21) Anmeldenummer: 09001405.1
(22) Anmeldetag: 02.02.2009
(51) Int. Cl.: B62D 25/14

(54) **Cockpit-Querträger für ein Kraftfahrzeug**
Cockpit cross-member for a motor vehicle
Traverse de cockpit pour un véhicule automobile

(30) Priorität: 24.04.2008 DE 102008020559; 30.05.2008 DE 102008026138
(43) Veröffentlichungstag der Anmeldung: 28.10.2009
(73) Patentinhaber: DURA Automotive Body & Glass Systems GmbH, 58840 Plettenberg (DE)
(72) Erfinder: Gerke, Jörg, 59846 Sundern (DE); Heese, Jens, 58840 Plettenberg (DE); Rau, Dirk, 57413 Finnentrop (DE)
(74) Vertreter: Zinnecker, Armin

(56) Entgegenhaltungen:
- EP-A- 1 348 613
- EP-A- 1 816 055
- WO-A-2008/034522
- DE-A1- 19 715 069
- DE-A1-102005 002 829

## Beschreibung

Die Erfindung betrifft einen Cockpit-Querträger für ein Kraftfahrzeug.

Aus der EP-A-1 348 613 ist ein Cockpit-Querträger für ein Kraftfahrzeug mit den Merkmalen des Oberbegriffs des Anspruchs 1 bekannt.

Die EP 1 298 035 B1, die DE 10 2005 002 829 A1 und die DE 197 15 069 A1 zeigen weitere Querträger für ein Kraftfahrzeug.

Aufgabe der Erfindung ist es, einen verbesserten Cockpit-Querträger für ein Kraftfahrzeug vorzuschlagen.

Erfindungsgemäß wird diese Aufgabe durch die Merkmale des Anspruchs 1 gelöst. Der Cockpit-Querträger umfaßt einen fahrerseitigen Querträger und einen beifahrerseitigen Querträger. Der fahrerseitige Querträger ist aus Stahl hergestellt. Der beifahrerseitige Querträger ist aus Aluminium hergestellt.

Durch den Einsatz der unterschiedlichen Werkstoffe Stahl und Aluminium läßt sich eine optimale Ausnutzung von Steifigkeit und Gewicht über den Cockpit-Querträger erzielen. Im Bereich der Anbindung der Lenksäule und gegebenenfalls des Klimageräts auf der Fahrerseite kommt eine Stahl-Lösung zur Steigerung der Steifigkeit und Lenksäulenfrequenz zum Einsatz. Im Bereich der Beifahrerseite ist eine Aluminium-Lösung zur Befestigung von I-Tafel und Handschuhkasten ausreichend, wobei zusätzlich Gewicht gespart wird. In der Praxis ist eine Gewichtsersparnis von bis zu 1 kg über das Gesamtbauteil möglich. Durch die Erfindung wird ein gewichts- und steifigkeitsoptimierter Querträger geschaffen.

Der fahrerseitige Querträger umfaßt eine fahrerseitige Tunnelstütze und eine beifahrerseitige Tunnelstütze umfassen. Die fahrerseitige Tunnelstütze und die beifahrerseitige Tunnelstütze sind durch ein Verbindungsstück verbunden.

Vorteilhafte Weiterbildungen sind in den Unteransprüchen beschrieben.

Vorteilhaft ist es, wenn der fahrerseitige Querträger und der beifahrerseitige Querträger durch ein thermisches Fügeverfahren, insbesondere durch eine CMT-Schweißverbindung, miteinander verbunden sind.

Vorteilhaft ist es, wenn der Cockpit-Querträger ein fahrerseitiges Querträgerteil umfaßt.

Vorteilhaft ist es, wenn der Cockpit-Querträger ein beifahrerseitiges Querträgerteil umfaßt.

Vorteilhaft ist es, wenn der beifahrerseitige Querträger eine Stirnwand-Abstützung umfaßt.

Die Erfindung betrifft ferner ein Kraftfahrzeug, das durch einen erfindungsgemäßen Cockpit-Querträger gekennzeichnet ist.

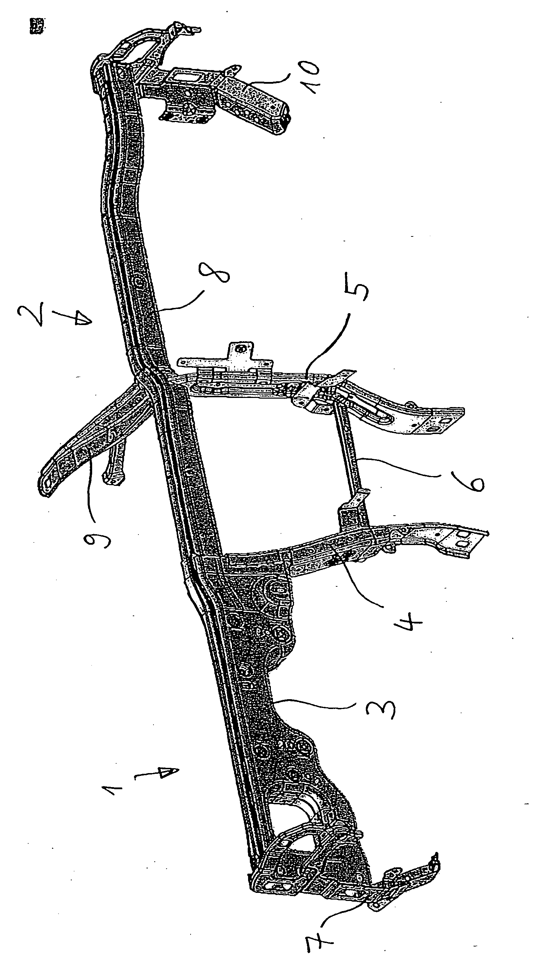

Ein Ausführungsbeispiel der Erfindung wird nachstehend anhand der beigefügten Zeichnung im einzelnen erläutert. In der Zeichnung zeigt die
- einzige Figur: einen Cockpit-Querträger in einer perspektivischen Ansicht.

Der in der Zeichnung dargestellte Cockpit-Querträger umfaßt einen fahrerseitigen Querträger 1 und einen beifahrerseitigen Querträger 2. Der fahrerseitige Querträger 1 ist aus Stahl hergestellt. Der beifahrerseitige Querträger 2 ist aus Aluminium hergestellt.

Der fahrerseitige Querträger 1 umfaßt ein fahrerseitiges Querträgerteil 3, eine fahrerseitige Tunnelstütze 4, eine beifahrerseitige Tunnelstütze 5 und ein Verbindungsstück 6. Alle Bestandteile des fahrerseitigen Querträgers 1 sind aus Stahl hergestellt.

Das fahrerseitige Querträgerteil 3 ist an seinem linken, in Bezug auf das Kraftfahrzeug äußeren Ende mit einem fahrerseitigen Seitenblech 7 aus Aluminium verbunden. Ferner ist das fahrerseitige Querträgerteil 3 an seinem rechten, in Bezug auf das Kraftfahrzeug inneren Ende mit der fahrerseitigen Tunnelstütze 4 verbunden, die vom rechten Ende des fahrerseitigen Querträgerteils 3 im wesentlichen vertikal nach unten verläuft. Das fahrerseitige Querträgerteil 3 verläuft horizontal und im wesentlichen quer zur Längsachse des Kraftfahrzeugs.

Der beifahrerseitige Querträger 2 umfaßt ein beifahrerseitiges Querträgerteil 8 und eine Stirnwand-Abstützung 9. Die Bestandteile des beifahrerseitigen Querträgers 2 sind aus Aluminium hergestellt.

Das beifahrerseitige Querträgerteil 8, das im wesentlichen horizontal und quer zur Kraftfahrzeug-Längsachse verläuft, in an seinem rechten, in Bezug auf das Kraftfahrzeug äußeren Ende mit einem beifahrerseitigen Seitenblech 10 aus Aluminium verbunden. Das linke, in Bezug auf das Kraftfahrzeug innere Ende des beifahrerseitigen Querträgerteils 8 ist mit dem rechten, in Bezug auf das Kraftfahrzeug ebenfalls inneren Ende des fahrerseitigen Querträgerteils 3 verbunden, und zwar durch eine CMT-Schweißverbindung. Das fahrerseitige Querträgerteil 3 und das beifahrerseitige Querträgerteil 8 fluchten im wesentlichen miteinander. An dem fahrerseitigen Querträgerteil 3 befindet sich die Anbindung für die Lenksäule und das Klimagerät. An dem beifahrerseitigen Querträgerteil 8 befindet sich die Anbindung für die I-Tafel und den Handschuhkasten.

An dem beifahrerseitigen Querträgerteil 3 ist im Abstand von seinem linken Ende die beifahrerseitige Tunnelstütze 5 angebracht, die von dem beifahrerseitigen Querträgerteil 8 im wesentlichen vertikal nach unten verläuft. Die fahrerseitige Tunnelstütze 4 und die beifahrerseitige Tunnelstütze 5 sind in ihrem unterem Bereich jeweils nach innen abgekröpft. Sie sind etwa in der Mitte ihrer Höhe durch das Verbindungsstück 6 miteinander verbunden. Das Verbindungsstück 6 verläuft im wesentlichen horizontal und quer zur Fahrzeug-Längsrichtung.

Mit dem beifahrerseitigen Querträgerteil 8 ist im Bereich des Anschlusses der beifahrerseitigen Tunnelstütze 5 die Stirnwand-Abstützung 9 verbunden, die im wesentlichen horizontal und quer zum beifahrerseitigen Querträgerteil 8 verläuft. Die Stirnwand-Abstützung 9 verläuft parallel zur Fahrzeug-Längsrichtung und, bezogen auf das Krafttahrzeug, von dem beifahrerseitigen Querträgerteil 8 nach vorne.

Durch die Erfindung wird ein Cockpit-Querträger geschaffen, der zur Aufnahme von verschiedenen Komponenten des Cockpits dient. Der Träger ist aus den Werkstoffen Aluminium und Stahl als Hybridverbindung aufgebaut. Die Verbindung erfolgt durch eine CMT-Schweißverbindung der unterschiedlichen Bleche. Die höher beanspruchten Bereiche der Fahrerseite mit der Anbindung zur Lenksäule und zum Klimagerät sind aus dem Werkstoff Stahl ausgeführt, um die entsprechenden Anforderungen zu erfüllen. Der Bereich der Beifahrerseite sowie die Anbindungen für die Instrumententafel werden aus dem Werkstoff Aluminium ausgeführt, um hier eine Gewichtsreduktion zu erzielen. Dadurch kann man eine optimale Lösung aus Steifigkeit, Lenksäuleneigenfrequenz und Gewicht erreichen. Im Ausführungsbeispiel sind die Teile 3, 4, 5 und 6 aus Stahl ausgeführt. Die Teile 8 und 9 sind aus Aluminium ausgeführt. Auch die Seitenbleche 7 und 10 sind aus Aluminium hergestellt.

Bei den Bestandteilen der Querträger 1 und 2 handelt es sich jeweils um Blechteile. Es ist allerdings auch möglich, eines oder mehrere oder alle Bestandteile der Querträger 1 und/oder 2 als Strangpressprofile auszuführen.

Die Verbindung des fahrerseitigen Querträgerteils 3 mit dem beifahrerseitigen Querträgerteil 8 und des beifahrerseitigen Querträgerteils 8 mit der beifahrerseitigen Tunnelstütze 5 erfolgen jeweils durch eine CMT-Schweißverbindung.

Anstelle der erwähnten CMT-Schweißverbindungen können auch andere thermische Fügeverfahren verwendet werden. Ferner ist es möglich, durch ein thermisches Fügeverfahren, insbesondere durch eine CMT-Schweißverbindung, weitere Anbauteile in Hybridbauweise an dem fahrerseitigen Querträger 1 und/oder an dem beifahrerseitigen Querträger 2 und/oder an einem oder mehreren oder allen ihrer Bestandteile zu befestigen.

## Patentansprüche

1. Cockpit-Querträger für ein Kraftfahrzeug, wobei der Cockpit-Querträger einen fahrerseitigen Querträger (1), der aus Stahl hergestellt ist, und einen beifahrerseitigen Querträger (2), der aus Aluminium hergestellt ist, umfaßt und wobei der fahrerseitige Querträger (1) eine fahrerseitige Tunnelstütze (4) umfaßt,
**dadurch gekennzeichnet,**
**daß** der fahrerseitige Querträger (1) eine beifahrerseitige Tunnelstütze (5) umfaßt
und **daß** die fahrerseitige Tunnelstütze (4) und die beifahrerseitige Tunnelstütze (5) durch ein Verbindungsstück (6) verbunden sind.

2. Cockpit-Querträger nach Anspruch 1, **dadurch gekennzeichnet, daß** der fahrerseitige Querträger (1) und der beifahrerseitige Querträger (2) durch ein thermisches Fügeverfahren, insbesondere durch eine CMT-Schweißverbindung, miteinander verbunden sind.

3. Cockpit-Querträger nach Anspruch 1 oder 2, **dadurch gekennzeichnet, daß** der fahrerseitige Querträger (1) ein fahrerseitiges Querträgerteil (3) umfaßt.

4. Cockpit-Querträger nach einem der vorhergehenden Ansprüche, **dadurch gekennzeichnet, daß** der beifahrerseitige Querträger (2) ein beifahrerseitiges Querträgerteil (8) umfaßt.

5. Cockpit-Querträger nach einem der vorhergehenden Ansprüche, **dadurch gekennzeichnet, daß** der beifahrerseitige Querträger (2) eine Stirnwand-Abstützung (9) umfaßt.

6. Kraftfahrzeug, **gekennzeichnet durch** einen Cockpit-Querträger nach einem der vorhergehenden Ansprüche.

## Claims

1. Cockpit cross-member for a motor vehicle, the cockpit cross-member comprising a driver-side cross-member (1), which is produced from steel, and a passenger-side cross-member (2), which is produced from aluminium, and the driver-side cross-member (1) comprising a driver-side tunnel support (4), **characterized in that** the driver-side cross-member (1) comprises a passenger-side tunnel support (5) and **in that** the driver-side tunnel support (4) and the passenger-side tunnel support (5) are connected by a connecting piece (6).

2. Cockpit cross-member according to Claim 1, **characterized in that** the driver-side cross-member (1) and the passenger-side cross-member (2) are connected to each other by a thermal joining process, in particular by a CMT welded joint.

3. Cockpit cross-member according to Claim 1 or 2, **characterized in that** the driver-side cross-member (1) comprises a driver-side cross-member part (3).

4. Cockpit cross-member according to one of the preceding claims, **characterized in that** the passenger-side cross-member (2) comprises a passenger-side cross-member part (8).

5. Cockpit cross-member according to one of the preceding claims, **characterized in that** the passenger-side cross-member (2) comprises an endwall support (9).

6. Motor vehicle **characterized by** a cockpit cross-member according to one of the preceding claims.

## Revendications

1. Traverse de cockpit pour un véhicule automobile, où la traverse de cockpit comprend une traverse côté conducteur (1), qui est fabriquée en acier, et une traverse côté passager (2), qui est fabriquée en aluminium, et où la traverse côté conducteur (1) comporte un support de tunnel côté conducteur (4),
**caractérisée**
**en ce que** la traverse côté conducteur (1) comporte un support de tunnel côté passager (5),
et **en ce que** le support de tunnel côté conducteur (4) et le support de tunnel côté passager (5) sont reliés par une pièce de liaison (6).

2. Traverse de cockpit selon la revendication 1, **caractérisée en ce que** la traverse côté conducteur (1) et la traverse côté passager (2) sont reliées par un procédé de jonction thermique, en particulier par un assemblage de soudage CMT.

3. Traverse de cockpit selon la revendication 1 ou 2, **caractérisée en ce que** la traverse côté conducteur (1) comporte une partie de traverse côté conducteur (3).

4. Traverse de cockpit selon l'une des revendications précédentes, **caractérisée en ce que** la traverse côté passager (2) comporte une partie de traverse côté passager (8).

5. Traverse de cockpit selon l'une des revendications précédentes, **caractérisée en ce que** la traverse côté passager (2) comprend un support de paroi frontale (9).

6. Véhicule automobile, **caractérisé par** une traverse de cockpit selon l'une des revendications précédentes.
